# EUROPÄISCHE PATENTSCHRIFT

(11) **EP 4 308 415 B1**
(45) Veröffentlichungstag und Bekanntmachung des Hinweises auf die Patenterteilung: **20.08.2025**
(21) Anmeldenummer: 22703405.5
(22) Anmeldetag: 04.02.2022
(51) Int. Cl.: B60N 2/90

(54) **VERSTELLANORDNUNG ZUR VERSTELLUNG MINDESTENS EINES SITZKONTURBEREICHS EINES FAHRZEUGSITZES FÜR EIN FAHRZEUG, FAHRZEUGSITZ MIT DER VERSTELLANORDNUNG UND FAHRZEUG MIT DEM FAHRZEUGSITZ**
ADJUSTING ASSEMBLY FOR ADJUSTING AT LEAST ONE SEAT CONTOUR REGION OF A VEHICLE SEAT FOR A VEHICLE, VEHICLE SEAT HAVING THE ADJUSTING ASSEMBLY, AND VEHICLE HAVING THE VEHICLE SEAT
ENSEMBLE D'AJUSTEMENT POUR AJUSTER AU MOINS UNE RÉGION DE CONTOUR DE SIÈGE D'UN SIÈGE DE VÉHICULE POUR UN VÉHICULE, SIÈGE DE VÉHICULE AYANT L'ENSEMBLE D'AJUSTEMENT, ET VÉHICULE AYANT LE SIÈGE DE VÉHICULE

(30) Priorität: 15.03.2021 DE 102021202474
(43) Veröffentlichungstag der Anmeldung: 24.01.2024
(73) Patentinhaber: Stellantis Auto SAS, 78300 Poissy (FR)
(72) Erfinder: KUHLEY, Christian, 65428 Rüsselsheim am Main (DE)
(74) Vertreter: BCIP
(86) Internationale Anmeldenummer: PCT/EP2022/052722
(87) Internationale Veröffentlichungsnummer: WO 2022/194445

(56) Entgegenhaltungen:
- DE-A1- 102006 037 521
- US-A- 4 796 955
- US-A1- 2018 339 626

## Beschreibung

### Technisches Gebiet:

Die Erfindung betrifft einen Fahrzeugsitz mit eine Verstauanordnung zur Verstellung mindestens eines Sitzkonturbereichs desFahrzeugsitzes. Die Erfindung betrifft auch ein Fahrzeug mit dem Fahrzeugsitz.

### Hintergrund:

Zur Anpassung einer Weite eines Sitz- oder Anlehnbereichs eines Fahrzeugsitzes ist es bekannt, eine mit Druckluft befüllbare und ausdehnbare Blase in einer Seitenwange eines Sitz- oder Anlehnbereichs vorzusehen. Es sind auch schon Druckschriften offenbart, die die Anordnung zweier Luftblasen beschreiben

Beispielsweise beschreibt die Druckschrift US 2018/0339626 A1 einen Fahrzeugsitz mit zwei Luftkammern, welche in einer Seitenwange des Fahrzeugsitzes zur Unterstützung einer Körperhaltung eines Insassen auf dem Fahrzeugsitz angeordnet sind. Die beiden Luftkammern weisen unterschiedliche Volumen auf und sind unabhängig voneinander über Ventile ansteuerbar. Eine Kammer ist zur Einstellung der Seitenwange und die andere zur dynamischen Anpassung der Seitenwange vorgesehen.

Aus dem Stand der Technik ist ferner die gattungsbildende US 4 796 955 A bekannt.

### Beschreibung:

Der Erfindung liegt die Aufgabe zugrunde, einen Fahrzeugsitz mit einer kostengünstigen Verstellanordnung zur effektiven Verstellung eines Sitzkonturbereichs des Fahrzeugsitzes bereitzustellen, welche eine hohe Verstellgeschwindigkeit bei ausreichendem Verstellweg aufweist. Diese Aufgabe wird durch einen Fahrzeugsitz mit der Verstellanordnung mit den Merkmalen des Anspruchs 1gelöst. Bevorzugte oder vorteilhafte Ausführungsformen der Erfindung ergeben sich aus den Unteransprüchen, der nachfolgenden Beschreibung und/oder den beigefügten Figuren.

Es wird eine Verstellanordnung vorgeschlagen, welche zur Verstellung mindestens eines Sitzkonturbereichs eines Fahrzeugsitzes für ein Fahrzeug ausgebildet ist. Beispielsweise ist der Sitzkonturbereich als eine Seitenwange einer Rückenlehne des Fahrzeugsitzes oder eines Sitzkissens des Fahrzeugsitzes ausgebildet. Alternativ kann der Sitzkonturbereich als ein anderer verstellbarer Bereich des Fahrzeugsitzes ausgebildet sein, z.B. Bereiche einer Kopfstütze oder Fußstütze des Fahrzeugsitzes.

Bei dem Fahrzeug handelt es sich beispielsweise um einen PKW oder um ein Nutzfahrzeug, insbesondere um ein leichtes Nutzfahrzeug. Bevorzugt kann der Sitzkonturbereich mittels der Verstellanordnung verbreitert oder verschmälert werden und/oder in seiner Position geändert werden. Der Fahrzeugsitz kann als ein Sitz einer vorderen Sitzreihe, insbesondere ein Fahrersitz oder Beifahrersitz, oder als ein Sitz einer hinteren Sitzreihe des Fahrzeugs ausgebildet sein.

Die Verstellanordnung umfasst eine erste Kammer und eine zweite Kammer. Vorzugsweise weisen die beiden Kammern eine elastische Außenhaut auf. Die beiden Kammern sind mit Druckluft befüllbar sind. Insbesondere sind die Kammern in Abhängigkeit von einem Füllgrad mit der Druckluft volumenveränderlich.

Die Verstellanordnung weist eine Pneumatikvorrichtung auf, welche zur Erzeugung und Einleitung der Druckluft in die erste Kammer und in die zweite Kammer ausgebildet ist.

Die Verstellanordnung umfasst eine Abstützeinrichtung. Die Abstützeinrichtung ist dazu ausgebildet, die beiden Kammern bei und/oder während einer Befüllung mit der Druckluft und/oder in einem vollständig mit der Druckluft befüllten Zustand gegeneinander abzustützen.

Es kann durch die Abstützeinrichtung erreicht werden, dass ein Verstellweg, insbesondere ein Hub, der beiden Kammern, wenn sie befüllt werden und/oder vollständig befüllt sind, voll ausgenutzt werden kann, um den Sitzkonturbereich zu verstellen. Dadurch kann eine Verstellgeschwindigkeit, mit der der Sitzkonturbereich verstellbar ist, in vorteilhafter Weise vergrößert werden. Insbesondere kann es ermöglicht werden, dass die Verstellung des Sitzkonturbereichs in Echtzeit auf Zustände des Fahrzeugs erfolgt, die zum Beispiel durch Unebenheiten, Steigungen oder Gefälle auf der Fahrbahn oder durch Lenkbewegungen des Fahrzeugs und/oder durch Fliehkräfte erzeugt sind.

In einer möglichen Ausführungsform der Erfindung ist die erste Kammer strömungstechnisch unabhängig von der zweiten Kammer angeordnet und/oder ausgebildet. Insbesondere sind die beiden Kammern nicht Bestandteil eines Mehrkammersystems. Vorzugsweise sind die beiden Kammern benachbart zueinander angeordnet. Insbesondere kontaktieren sich beide Kammern und drücken gegeneinander, wenn sie mit der Druckluft befüllt werden und/oder vollständig mit dieser befüllt sind. Bevorzugt ist die Abstützeinrichtung zwischen der ersten Kammer und der zweiten Kammer angeordnet. Insbesondere bildet die Abstützeinrichtung auf einer Seite eine erste Kontaktfläche für die erste Kammer und auf der gegenüberliegenden Seite eine zweite Kontaktfläche für die zweite Kammer. Im Speziellen drückt die erste Kammer gegen die erste Kontaktfläche und die zweite Kammer gegen die zweite Kontaktfläche, wenn sie mit der Druckluft befüllt werden und/oder vollständig mit dieser befüllt sind.

Dies hat den Vorteil, dass die beiden Kammern nicht unmittelbar gegeneinanderdrücken, sondern vielmehr durch die dazwischen angeordnete Abstützeinrichtung gegeneinander abgestützt werden. Ein Eindrücken einer Kammer durch die andere bei und/oder während der Befüllung mit der Druckluft und/oder in dem vollständig befüllten Zustand und eine daraus resultierende Reduzierung des maximal erreichbaren Verstellwegs kann in vorteilhafter Weise reduziert oder sogar vollständig vermieden werden. Es kann mittels der Abstützeinrichtung ein ausreichender Verstellweg oder sogar ein maximal erreichbarer Verstellweg ausgenutzt werden, was insbesondere eine erhöhte Reaktionsgeschwindigkeit und/oder eine vergrößerte Verstellgeschwindigkeit des Sitzkonturbereichs ermöglicht.

In einer möglichen konstruktiven Umsetzung der Erfindung ist die Abstützeinrichtung an der ersten Kammer befestigt. Alternativ kann die Abstützeinrichtung an der zweiten Kammer befestigt sein. Beispielsweise ist die Abstützeinrichtung mit einer der beiden Kammern stoffschlüssig verbunden, zum Beispiel mit dieser verschweißt.

In einer beispielhaften Realisierung der Erfindung ist die Abstützeinrichtung als ein Streifen, insbesondere als ein dünner Streifen mit einer Stärke von maximal bis zu 2 Millimetern, vorzugsweise von maximal bis zu 1,5 Millimetern, insbesondere von maximal bis zu 1 Millimeter und/oder von mindestens 0,5 Millimetern ausgebildet. Die Abstützeinrichtung kann aus einem Kunststoff, einem Gewebe, einem Metall oder aus einem anderen geeigneten Material gebildet sein. Die Abstützeinrichtung ist insbesondere in dieser Realisierung kostengünstig herstellbar. Vorteilhaft ist, dass die Abstützeinrichtung in der Verstellanordnung nur ein sehr geringes Mehrgewicht verursacht und nur wenig Bauraum benötigt.

Eine mögliche Ausgestaltung der Erfindung sieht vor, dass die erste Kammer dazu ausgebildet ist, den Sitzkonturbereich statisch zu verstellen. Beispielsweise bläht sich die erste Kammer bei und/oder während der Befüllung mit der Druckluft auf und verbreitert so den Sitzkonturbereich. Wenn die Druckluft wieder aus der ersten Kammer abgelassen wird, wird der Sitzkonturbereich wieder verschmälert. Wenn der Sitzkonturbereich als die Seitenwange der Rückenlehne des Fahrzeugsitzes ausgebildet ist, wird vorzugsweise eine Breite einer Anlehnfläche der Rückenlehne durch eine Verbreiterung der Seitenwange verringert. Wenn der Sitzkonturbereich als die Seitenwange des Sitzkissens des Fahrzeugsitzes ausgebildet ist, wird insbesondere eine Breite einer Sitzfläche des Sitzkissens durch die Verbreiterung der Seitenwange verringert. Dadurch kann die Anlehnfläche oder die Sitzfläche an die Körpermaße des Insassen angepasst werden. Die Anpassung kann über einen längeren Zeitraum beibehalten werden und/oder in Abhängigkeit von Fahrzuständen des Fahrzeugs erfolgen.

In einer weiteren möglichen Ausgestaltung der Erfindung ist die zweite Kammer dazu ausgebildet, den Sitzkonturbereich dynamisch zu verstellen. Vorzugsweise ist die zweite Kammer dazu vorgesehen, die Verstellgeschwindigkeit, mit der die Verstellung des Sitzkonturbereichs erfolgt, zu erhöhen.

Vorteilhaft ist, dass durch die Verstellung des Sitzkonturbereichs ein komfortables und körperangepasstes Sitzen und/oder Anlehnen für den auf dem Fahrzeugsitz sitzenden Insassen gewährleistet werden kann. Insbesondere bei bestimmten Fahrzuständen des Fahrzeugs, zum Beispiel bei Kurvenfahrten mit hoher Fahrgeschwindigkeit und/oder in scharfen Kurven, ist die Möglichkeit der Steigerung der Verstellgeschwindigkeit besonders von Vorteil, da die Verstellung des Sitzkonturbereichs in Echtzeit mit den Fahrzuständen erfolgen kann. Vorzugsweise kann der Insasse bei Einwirkung von fahrtbedingten Kräften, z.B. von Fliehkräften, durch den verbreiterten und verstellten Sitzkonturbereich seitlich am Rücken und/oder Gesäß gestützt werden. Insbesondere kann dadurch eine sichere verkippfreie Körperhaltung des Insassen auf dem Fahrzeugsitz gewährleistet werden.

Eine mögliche konstruktive Umsetzung der Erfindung sieht vor, dass die zweite Kammer ein kleineres Volumen aufweist als die erste Kammer. Dadurch ist die zweite Kammer vorzugsweise schneller vollständig mit der Druckluft befüllbar als die erste Kammer. Die erste Kammer kann somit ihre Funktion der statischen Verstellung des Sitzkonturbereichs übernehmen und die zweite Kammer kann dadurch ihre Funktion der dynamischen Verstellung, insbesondere der Steigerung der Verstellgeschwindigkeit, übernehmen.

Insbesondere wenn die erste großvolumige Kammer und die kleinvolumige zweite Kammer mit derselben Menge an Druckluft befüllt sind, ist ein Luftdruck in der zweiten Kammer höher als der Luftdruck in der ersten Kammer. Somit würde die zweite Kammer die erste Kammer ohne die zwischenliegende Abstützeinrichtung eindrücken und den Verstellweg reduzieren. Gerade aus diesem Grund ist die Anordnung der Abstützeinrichtung zwischen den beiden Kammern von besonderem Vorteil, da diese das Eindrücken der ersten Kammer und die dadurch verursachte Reduzierung des Verstellwegs deutlich verringern oder sogar verhindern kann.

In einer bevorzugten Ausführungsform der Erfindung umfasst die Pneumatikvorrichtung eine Pumpeneinrichtung und eine Ventileinrichtung. Vorzugsweise ist die Pumpeneinrichtung dazu ausgebildet, die Druckluft insbesondere durch Ansaugen und Verdichten von Umgebungsluft, zu erzeugen. Bevorzugt ist die Ventileinrichtung dazu ausgebildet, die Druckluft in die erste Kammer und in die zweite Kammer einzuleiten. Hierzu kann die Ventileinrichtung ein oder mehrere Ventile aufweisen. Insbesondere ist die Ventileinrichtung dazu ansteuerbar, die Druckluft unabhängig voneinander in die erste Kammer und in die zweite Kammer einzuleiten. Beispielsweise umfasst die Pneumatikvorrichtung einen oder mehrere Schläuche zur strömungstechnischen Anbindung des oder der Ventile an die Kammern. Für den Fall, dass die Einleitung der Druckluft separat für jede Kammer ansteuerbar ist, ist jede Kammer vorzugsweise durch ein eigenes Ventil mit angeschlossenem Schlauch an die Ventileinrichtung angebunden.

In einer weiteren möglichen Ausführungsform der Erfindung umfasst die Verstellanordnung eine Steuerungseinrichtung. Vorzugsweise ist die Steuerungseinrichtung dazu ausgebildet, die Ventileinrichtung, insbesondere Öffnung des oder der Ventile, dazu anzusteuern, die Druckluft in beiden Kammern einzuleiten. In entsprechender Weise ist die Steuerungseinrichtung dazu ausgebildet, die Ventileinrichtung dazu anzusteuern, die Druckluft aus den beiden Kammern auszulassen. Möglich ist es im Rahmen der Erfindung, dass die Steuerungseinrichtung durch den Insassen mittels einer Betätigungseinrichtung des Fahrzeugsitzes oder des Fahrzeugs aktivierbar ist. Somit kann der Insasse durch Betätigung der Betätigungseinrichtung die Verstellung des Sitzkonturbereichs selbstständig vornehmen.

Es kann im Rahmen der Erfindung auch vorgesehen sein, dass die Steuerungseinrichtung dazu ausgebildet ist, die Ventileinrichtung auf Basis von Steuerdaten, die z.B. durch die Fahrzustände des Fahrzeugs, insbesondere durch die Unebenheiten, Steigungen oder Gefälle auf der Fahrbahn und/oder durch die Lenkbewegungen und/oder Fliehkräfte erzeugt sind, anzusteuern. Hierzu weist die Verstellanordnung vorzugsweise eine Auswerteeinrichtung auf, welche zur Erfassung und Auswertung der Steuerdaten ausgebildet ist.

Ein Fahrzeugsitz mit der Verstellanordnung nach der bisherigen Beschreibung und/oder nach einem der Ansprüche 1 bis 10 bildet einen weiteren Gegenstand der Erfindung. Vorzugsweise ist der Fahrzeugsitz wie bisher beschrieben ausgebildet. Die Verstellanordnung ist dazu ausgebildet, den Sitzkonturbereich des Fahrzeugsitzes zu verstellen, insbesondere zu verbreitern oder zu verschmälern. Vorzugsweise weist der Fahrzeugsitz die Rückenlehne und das Sitzkissen auf, wobei sich der Insasse an der Rückenlehne anlehnen kann und auf dem Sitzkissen sitzen kann. Insbesondere ist der Sitzkonturbereich als die Seitenwange der Rückenlehne oder des Sitzkissens ausgebildet. Optional ist die Seitenwange durch die Sitzschalenstruktur des Fahrzeugsitzes ausgeformt, wobei die Sitzschalenstruktur zumindest abschnittsweise mit einer Polsterung bedeckt sein kann.

Im Rahmen der Erfindung ist es möglich, dass die Rückenlehne zwei Seitenwangen aufweist und/oder dass das Sitzkissen zwei Seitenwangen aufweist. Vorzugsweise umfasst die Verstellanordnung mehr als zwei Kammern, insbesondere vier oder acht Kammern, wobei jeweils zwei Kammern den Seitenwangen der Rückenlehne zugeordnet sind und/oder wobei jeweils zwei Kammern den Seitenwangen des Sitzkissens zugeordnet sind. Für jeweils zwei der Kammern kann eine separate Pumpeneinrichtung und/oder Ventileinrichtung vorgesehen sein. Es ist jedoch insbesondere aus Gewichts-, Bauraum- und Kostengründen bevorzugt, dass alle Kammern an dieselbe Pumpeneinrichtung und/oder Ventileinrichtung angeschlossen sind und mit der Druckluft versorgt werden.

In einer möglichen Realisierung der Erfindung sind die jeweiligen zwei Kammern der Seitenwangen der Rückenlehne oder die jeweiligen zwei Kammern des Sitzkissens unabhängig voneinander ansteuerbar. Insbesondere können die beiden Kammern nur einer Seitenwange an der Rückenlehne und/oder auf dem Sitzkissen mit der Druckluft gefüllt werden, wobei die Kammern in der anderen Seitenwange in ihrem ursprünglichen Füllgrad verbleiben. Insbesondere können dadurch asymmetrische und/oder unterschiedlich breite Seitenwangen an der Rückenlehne und/oder an dem Sitzkissen in Abhängigkeit von den Fahrzuständen erzielt werden. Beispielsweise stellt sich bei Fahrt in einer Linkskurve nur die rechte Seitenwange der Rückenlehne und/oder des Sitzkissens auf, um den Insassen zu unterstützen, wobei das zugeordnete linke Seitenpolster sich hinsichtlich des Füllgrads nicht verändert. Vorzugweise funktioniert dieses Prinzip umgekehrt in einer Rechtskurve. Alternativ ist es im Rahmen der Erfindung möglich, dass beide Seitenwangen der Rückenlehne und/oder des Sitzkissens übereinstimmend verbreitert werden, insbesondere die Kammern beider Seitenwangen unabhängig von der Kurvenrichtung in übereinstimmender Weise und/oder Menge mit der Druckluft befüllt werden.

Gemäß der Erfindung weist der Sitzkonturbereich einen Klappenmechanismus mit mindestens einer Klappe und einer Scharniereinrichtung für die Klappe auf. Bevorzugt ist der Klappenmechanismus in dem Sitzkonturbereich angeordnet, insbesondere zwischen der Sitzschalenstruktur und der Polsterung integriert. Vorzugsweise sind die beiden Kammern im Bereich des Klappenmechanismus benachbart zu der mindestens einen Klappe angeordnet. Erfindungsgemäß bilden die Kammern Aktoren, durch welche die mindestens eine Klappe um die Scharniereinrichtung geschwenkt und/oder geklappt werden kann. Erfindungsgemäß ist der Klappenmechanismus durch die Befüllung der ersten und zweiten Kammer mit der Druckluft aktivierbar, um den Sitzkonturbereich zu verbreitern oder zu verschmälern.

Beispielsweise klappt die mindestens eine Klappe bei und/oder während der Einleitung der Druckluft in die Kammern um die Scharniereinrichtung und drückt gegen die Polsterung und/oder gegen die Sitzschalenstruktur, wodurch die Verstellung, insbesondere die Verbreiterung des Sitzkonturbereichs erfolgt. Durch die Ausleitung der Druckluft aus den Kammern kann vorzugsweise die entgegengesetzte Verstellung, insbesondere die Verschmälerung des Sitzkonturbereichs, erfolgen. Der Klappenmechanismus, insbesondere die mindestens eine Klappe und/oder die Scharniereinrichtung kann optional einen Bestandteil des Sitzkonturbereichs bilden.

In einer weiteren möglichen Ausführungsform der Erfindung ist die Abstützeinrichtung in dem Sitzkonturbereich festgelegt. In diesem Fall ist die Abstützeinrichtung nicht an einer der Kammern angeordnet. Erfindungsgemäß ist die Abstützeinrichtung an dem Klappenmechanismus, insbesondere an der Scharniereinrichtung, befestigt. Optional kann eine formschlüssige Verbindung zwischen der Abstützeinrichtung und der Scharniereinrichtung vorgesehen sein.

Ein Fahrzeug mit dem Fahrzeugsitz nach der bisherigen Beschreibung und/oder nach einem der Ansprüche 11 bis 14 bildet einen weiteren Gegenstand der Erfindung. Das Fahrzeug weist eine Lenkeinrichtung zur Lenkung des Fahrzeugs mittels Lenkbewegungen auf. Während der Fahrt weist das Fahrzeug bestimmte Fahrzeugstände auf, welche z.B. durch die Lenkbewegungen und/oder durch Unebenheiten, Steigungen oder Gefälle auf der Fahrbahn verursacht sein können. Die Auswerteeinrichtung ist dazu ausgebildet, die Fahrzustände als die Steuerdaten zu erfassen, auszuwerten und an die Steuerungseinrichtung zu übermitteln.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine schematische Darstellung einer Verstellanordnung zur Verstellung eines Sitzkonturbereichs eines Fahrzeugsitzes für ein Fahrzeug;
- Figur 2: eine mit Druckluft befüllbare Kammer der Verstellanordnung, an der eine Abstützeinrichtung der Verstellanordnung angeordnet ist;
- Figur 3: eine schematische Darstellung von zwei Kammern der Verstellanordnung, wobei die Kammern mit der Druckluft befüllt werden, sich an der Abstützeinrichtung abstützen und den Sitzkonturbereich entlang eines Verstellwegs verstellen können.

Einander entsprechende oder gleiche Teile sind in den Figuren jeweils mit den gleichen Bezugszeichen versehen.

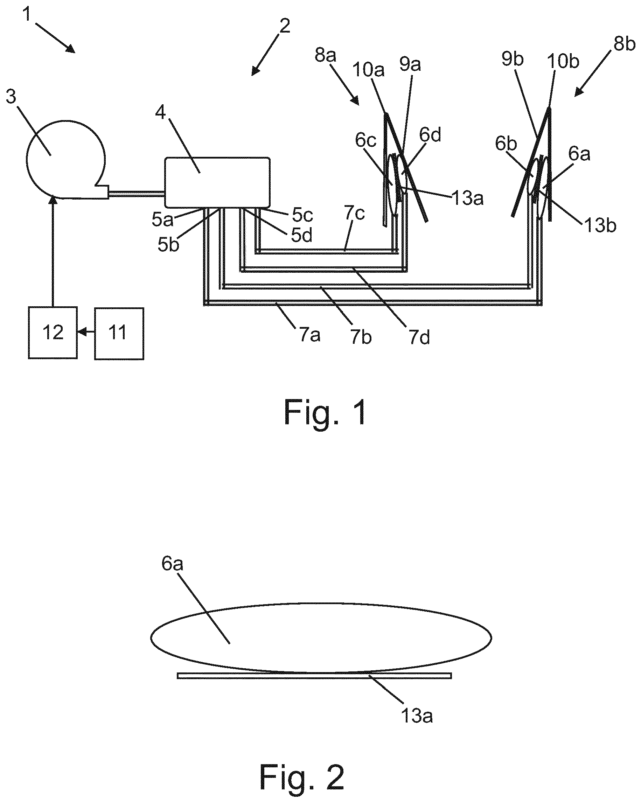

In der Figur 1 ist eine schematische Darstellung einer Verstellanordnung 1 zur Verstellung mindestens eines Sitzkonturbereichs eines Fahrzeugsitzes für ein Fahrzeug, insbesondere zur Verstellung zweier Sitzkonturbereiche, gezeigt. Das Fahrzeug ist zum Beispiel als ein PKW oder als ein Nutzfahrzeug ausgebildet. Der Fahrzeugsitz kann als ein Sitz einer vorderen Sitzreihe oder als ein Sitz einer hinteren Sitzreihe des Fahrzeugs ausgebildet sein.

Der Fahrzeugsitz weist eine Rückenlehne mit einer Anlehnfläche und ein Sitzkissen mit einer Sitzfläche auf. Zwei Sitzkonturbereiche sind an der Rückenlehne und weitere zwei Sitzkonturbereiche an dem Sitzkissen angeordnet, wobei diese jeweils zu beiden Seiten der Anlehnfläche und der Sitzfläche angeordnet sind. Mittels der Verstellanordnung 1 können die Sitzkonturbereiche der Rückenlehne oder des Sitzkissens verstellt werden, insbesondere können Sie verbreitert oder verschmälert werden, um eine Breite der Anlehnfläche oder der Sitzfläche an Körpermaße eines Insassen auf dem Fahrzeugsitz und/oder an Fahrzustände des Fahrzeugs, zum Beispiel an Unebenheiten, Steigungen oder Gefälle oder an Lenkbewegungen des Fahrzeugs, anzupassen. Die Sitzkonturbereiche sind durch eine Sitzschalenstruktur ausgeformt, wobei die Sitzschalenstruktur zumindest abschnittsweise durch eine Polsterung bedeckt sein kann. Wenn die Sitzkonturbereiche der Rückenlehne und des Sitzkissens verstellt werden sollen, werden bevorzugt zwei Verstellanordnungen 1 an dem Fahrzeugsitz

Die Verstellanordnung 1 umfasst eine Pneumatikvorrichtung 2 mit einer Pumpeneinrichtung 3 und mit einer Ventileinrichtung 4. Die Pumpeneinrichtung 3 ist dazu ausgebildet, Umgebungsluft anzusaugen und zu verdichten und als Druckluft bereitzustellen. Die Ventileinrichtung 4 weist mehrere, z.B. vier Ventile 5a, 5b, 5c, 5d auf. Die Druckluft kann durch die Ventile 5a, 5b, 5c, 5d, wenn sie geöffnet sind, entweichen.

Die Verstellanordnung 1 weist mehrere, z.B. vier, mit der Druckluft befüllbare Kammern 6a, 6b, 6c, 6d auf. Die Kammern 6a, 6b, 6c, 6d weisen eine elastische Außenhaut auf. Wenn sie mit der Druckluft befüllt werden können sich die Kammern 6a, 6b, 6c, 6d ausdehnen, insbesondere ihr Volumen vergrößern. Die Kammern 6a, 6b, 6c, 6d sind strömungstechnisch unabhängig voneinander, insbesondere sind sie nicht Bestandteil eines Mehrkammersystems.

Die Pneumatikvorrichtung 2 weist mehrere, zum Beispiel vier, Schläuche 7a, 7b, 7c, 7d auf. Jede der Kammern 6a, 6b, 6c, 6d ist über einen Schlauch 7a, 7b, 7c, 7d an eines der Ventile 5a, 5b, 5c, 5d angebunden, sodass jede der Kammern 6a, 6b, 6c, 6d unabhängig von der anderen mit der Druckluft befüllt werden kann.

Der Fahrzeugsitz weist in jedem der Sitzkonturbereiche einen ersten und zweiten Klappenmechanismus 8a, 8b mit mindestens einer Klappe 9a, 9b auf, die um eine Scharniereinrichtung 10a, 10b schwenken und/oder klappen kann. Eine erste Kammer 6a und eine zweite Kammer 6b sind im Bereich des ersten Klappenmechanismus 6a benachbart zueinander angeordnet.

Zwischen der ersten Kammer 6a und der zweiten Kammer 6b ist eine erste Abstützeinrichtung 13a angeordnet, welche dazu ausgebildet ist, die beiden Kammern 6a, 6b bei und/oder während der Befüllung mit der Druckluft und/oder in dem vollständig befüllten Zustand der beiden Kammern 6a, 6b gegenseitig abzustützen. Die Abstützeinrichtungen 13a, 13b sind als dünne Streifen, z.B. aus einem Kunststoff, Metall oder Gewebe, mit einer Stärke von maximal bis zu 2 Millimetern, vorzugsweise von maximal bis zu 1,5 Millimetern, insbesondere von maximal bis zu 1 Millimeter und/oder von mindestens 0,5 Millimetern ausgebildet. Somit sind die Abstützeinrichtungen 13a, 13b kostengünstig herstellbar, leichtgewichtig ausgebildet und bauraumsparend in der Verstellanordnung 1 integriert.

Eine dritte Kammer 6c und eine vierte Kammer 6d sind benachbart zueinander im Bereich des zweiten Klappenmechanismus 6b angeordnet. Zwischen der dritten Kammer 6c und der vierten Kammer 6d ist eine zweite Abstützeinrichtung 13b angeordnet, welche dazu ausgebildet ist, die beiden Kammern 6c, 6d bei und/oder während der Befüllung mit der Druckluft und/oder in dem vollständig befüllten Zustand der beiden Kammern 6c, 6d gegenseitig abzustützen.

In der Figur 2 ist gezeigt, dass die erste Abstützeinrichtung 13a an der ersten Kammer 6a angeordnet ist. Alternativ kann die erste Abstützeinrichtung 13a an der zweiten Kammer 6b angeordnet sein. Die zweite Abstützeinrichtung 13b ist in entsprechender Weise an einer der beiden Kammern 6c, 6d angeordnet. Die Abstützeinrichtungen 13a, 13b können mit der jeweiligen Kammer 6a, 6b, 6c, 6d stoffschlüssig verbunden sein, zum Beispiel mit dieser verschweißt sein. Dies ist kostengünstig umzusetzten. Alternativ können die Abstützeinrichtungen 13a, 13b in dem jeweiligen Klappenmechanismus 6a, 6b integriert sein, z.B. formschlüssig mit der jeweiligen Scharniereinrichtung 10a, 10b verbunden sein.

Durch die Befüllung der jeweiligen Kammern 6a, 6b, 6c, 6d mit der Druckluft dehnen sich diese aus und drücken gegen die entsprechenden Klappen 9a, 9b, sodass diese verschwenkt und/oder geklappt werden und sodass die Sitzkonturbereiche verstellt werden. Die befüllten Kammern 6a, 6b, 6c, 6d sind insbesondere Aktoren zur Betätigung der Klappen 9a, 9b.

Die Verstellanordnung 1 umfasst eine Steuerungseinrichtung 11 und eine Auswerteeinrichtung 11. Die Auswerteeinrichtung 12 ist dazu ausgebildet, auf Basis der Fahrzustände des Fahrzeugs Steuerdaten zu erfassen, auszuwerten und an die Steuerungseinrichtung 11 zu übermitteln. Die Steuerungseinrichtung 11 ist dazu ausgebildet, die Pneumatikvorrichtung 2 auf Basis der Steuerdaten dazu anzusteuern, die Kammern 6a, 6b, 6c, 6d mit der Druckluft zu befüllen oder die Druckluft aus diesen abzulassen. Hierzu sind die Ventile 5a, 5b, 5c 5d einzelnen ansteuerbar, sodass die Kammern 6a, 6b, 6c, 6d unabhängig voneinander mit der Druckluft befüllt werden können. Insbesondere können die Sitzkonturbereiche des Fahrzeugsitzes bei Unebenheiten, Steigungen oder Gefällen der Fahrbahn oder bei Kurvenfahrten des Fahrzeugs bedarfsgerecht verstellt werden, um eine aufrechte und verkippfreie Körperhaltung des Insassen auf dem Fahrzeugsitz gewährleisten zu können. Das Fahrzeug oder der Fahrzeugsitz kann auch eine Betätigungseinrichtung für den Insassen aufweisen, mittels der der Insasse die Feststellvorrichtung 1 zur individuellen komfortablen Einstellung der Sitzkonturbereiche betätigen kann.

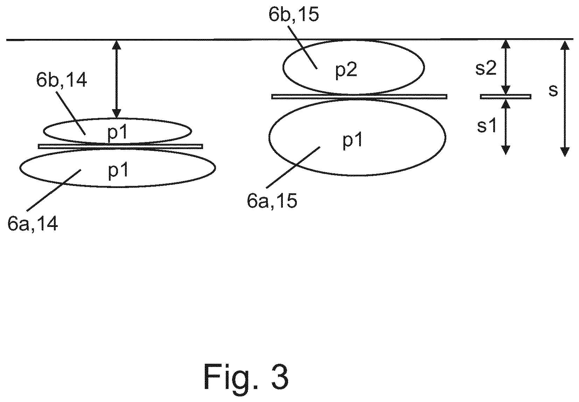

Die erste Kammer 6a weist ein größeres Volumen als die zweite Kammer 6b auf und die dritte Kammer 6c weist ein größeres Volumen als die vierte Kammer 6d auf. Somit können die zweite Kammer 6b und die vierte Kammer 6d als kleinvolumige Kammern 6b, 6d bei gleichzeitiger Befüllung mit jeweils der gleichen Menge an Druckluft schneller in einen vollständig befüllten Zustand 15 (Fig. 3) überführt werden, als die anderen beiden großvolumigen Kammern 6a, 6c. Aus diesem Grund sind die kleinvolumigen Kammern 6b, 6d dazu angeordnet und/oder ausgebildet, die Sitzkonturbereiche dynamisch zu verstellen, insbesondere eine Verstellgeschwindigkeit, mit der die Sitzkonturbereiche verstellt werden, vorzugeben. Die großvolumigen Kammern 6a, 6c sind dagegen für eine statische Verstellung der Sitzkonturbereiche, insbesondere für eine Breitenausdehnung der Sitzkonturbereiche, angeordnet und/oder ausgebildet.

In dem vollständig befüllten Zustand 15 der Kammern 6a, 6b, 6c, 6d herrscht in den kleinvolumigen Kammern 6b, 6c ein höherer Druck p3 als in den großvolumige Kammern 6a, 6c, in denen ein geringerer Druck p2 vorherrscht (Fig. 3).

Bei benachbart angeordneten Kammern, zwischen denen keine Abstützeinrichtung vorgesehen ist, würde die Kammer, in der der höhere Druck p3 vorherrscht, die andere Kammer mit dem geringeren Druck p2 bei und/oder während der Befüllung mit der Druckluft und/oder in dem vollständig befüllten Zustand 15 (Fig. 3) ein Stückweit eindrücken. Dadurch würde ein möglicher erreichbarer Gesamtverstellweg oder Gesamthub der beiden Kammern verkürzt.

Um diesen Nachteil auszugleichen oder sogar ganz zu verhindern, ist zwischen der ersten Kammer 6a und der zweiten Kammer 6b die erste Abstützeinrichtung 13a angeordnet und zwischen der dritten Kammer 6c und der vierten Kammern 6d ist die zweite Abstützeinrichtung 13b angeordnet. Das Eindrücken der Kammern 6b, 6d mit dem geringeren Druck p2 durch die anderen Kammern 6a, 6c mit dem höheren Druck p3 wird durch die jeweilige Abstützeinrichtungen 13a, 13b reduziert oder verhindert.

Dieser Effekt ist in der Figur 3 anhand der ersten Kammer 6a und der zweiten Kammer 6b mit der dazwischen angeordneten ersten Abstützeinrichtung 13a beispielhaft dargestellt. Die beiden Kammern 6a, 6b sind zum einen in einem unbefüllten oder nahezu unbefüllten Zustand 14 und in dem mit der Druckluft vollständig befüllten Zustand 15 gezeigt.

Die Kammern 6a, 6b drücken bei und/oder während der Befüllung und/oder im vollständig befüllten Zustand 15 gegen zwei gegenüberliegende Kontaktflächen der ersten Abstützeinrichtung 13a. Dies führt dazu, dass sich die einwirkende Druckkraft gleichmäßig über die Kontaktflächen verteilt. Dadurch wird die erste Kammer 6a, in der der Druck p2 geringer ist als in der zweiten Kammer 6b, deutlich weniger oder gar nicht eingedrückt. Der somit erreichbare Verstellweg s oder Gesamthub setzt sich durch einen Verstellweganteil s1 der ersten Kammer 6a und durch einen Verstellweganteils 2 der zweiten Kammer 6b verlustfrei oder weitestgehend verlustfrei zusammen. Zusammen mit der durch die unterschiedlichen Volumen der Kammern 6a, 6b erzielten vergrößerten Verstellgeschwindigkeit kann die Verstellung des Sitzkonturbereichs in Echtzeit zu den Fahrzuständen erfolgen.

### Bezugszeichenliste:

- 1: Verstellanordnung
- 2: Pneumatikvorrichtung
- 3: Pumpeneinrichtung
- 4: Ventileinrichtung
- 5: a, b, c, d Ventile
- 6: a, b, c, d Kammern
- 7: a, b, c, d Schläuche
- 8: a, b Klappenmechanismen
- 9: a, b Klappen
- 10: a, b Scharniereinrichtungen
- 11: Steuerungseinrichtung
- 12: Auswerteeinrichtung
- 13: a, b Abstützeinrichtungen
- 14: unbefüllter Zustand
- 15: vollständig befüllter Zustand
- s1: Verstellweganteil der ersten Kammer
- s2: Verstellweganteil der zweiten Kammer
- s: Gesamtverstellweg/Hub

## Patentansprüche

1. Fahrzeugsitz mit einer Verstellanordnung (1),
wobei die Verstellanordnung (1) eine erste Kammer (6a) und mindestens eine zweite Kammer (6b, 6c, 6d) umfasst, wobei die beiden Kammern (6a, 6b) mit Druckluft befüllbar sind,
wobei die Verstellanordnung (1) eine Pneumatikvorrichtung (2) zur Erzeugung und Einleitung der Druckluft in die erste Kammer (6a) und in die zweite Kammer (6b) aufweist,
wobei die Verstellanordnung (1) mindestens eine Abstützeinrichtung (13a, 13b) umfasst, wobei die Abstützeinrichtung (13a) dazu ausgebildet ist, die beiden Kammern (6a, 6b) bei und/oder während einer Befüllung mit der Druckluft und/oder in einem vollständig befüllten Zustand (15) gegeneinander abzustützen,
wobei die Verstellanordnung (1) zur Verstellung eines Sitzkonturbereichs des Fahrzeugsitzes ausgebildet und/oder angeordnet ist,
**dadurch gekennzeichnet, dass**
der Sitzkonturbereich einen Klappenmechanismus (8a) mit einer Scharniereinrichtung (10a) aufweist, wobei der Klappenmechanismus (8a) durch die Befüllung der ersten und/oder zweiten Kammer (6a, 6b) mit der Druckluft aktivierbar ist und um die Scharniereinrichtung (10a) zur Verstellung des Sitzkonturbereichs klappbar ist, wobei die Abstützeinrichtung (13a) an dem Klappenmechanismus (8a) festgelegt ist, und
dass die erste Kammer (6a) zur statischen Verstellung des Sitzkonturbereichs ausgebildet und/oder angeordnet ist und/oder dass die zweite (6b) Kammer zur dynamischen Verstellung des Sitzkonturbereichs ausgebildet und/oder angeordnet ist.

2. Fahrzeugsitz nach Anspruch 1, **dadurch gekennzeichnet, dass** die erste Kammer (6a) strömungstechnisch unabhängig von der zweiten Kammer (6b) ist und/oder benachbart zu der zweiten Kammer (6b) angeordnet ist, wobei die Abstützeinrichtung (13a) zwischen der ersten Kammer (6a) und der zweiten Kammer (6b) angeordnet ist.

3. Fahrzeugsitz nach Anspruch 1 oder 2, **dadurch gekennzeichnet, dass** die Abstützeinrichtung (13a) an der ersten Kammer (6a) oder an der zweiten Kammer (6b) angeordnet ist.

4. Fahrzeugsitz nach einem der vorhergehenden Ansprüche, **dadurch gekennzeichnet, dass** die Abstützeinrichtung (13a) ein Streifen aus einem Kunststoff, einem Gewebe oder aus einem Metall ist.

5. Fahrzeugsitz nach einem der vorhergehenden Ansprüche, **dadurch gekennzeichnet, dass** die zweite Kammer (6b) ein größeres Volumen aufweist als die erste Kammer (6a).

6. Fahrzeugsitz nach einem der vorhergehenden Ansprüche, **dadurch gekennzeichnet, dass** die zweite Kammer (6b) schneller vollständig befüllbar ist als die erste Kammer (6a).

7. Fahrzeugsitz nach einem der vorhergehenden Ansprüche, **dadurch gekennzeichnet, dass** ein Luftdruck in der zweiten mit der Druckluft befüllten Kammer (6b) höher ist als der Luftdruck in der ersten mit der Druckluft befüllten Kammer (6a).

8. Fahrzeugsitz nach einem der vorhergehenden Ansprüche, **dadurch gekennzeichnet, dass** die Pneumatikvorrichtung (2) eine Pumpeneinrichtung (3) zur Erzeugung der Druckluft und eine Ventileinrichtung (4) zur Einleitung der Druckluft in die erste Kammer (6a) und in die zweite Kammer (6b) umfasst, wobei die Einleitung der Druckluft in die erste Kammer (6a) unabhängig von der Einleitung der Druckluft in die zweite Kammer (6b) ansteuerbar ist.

9. Fahrzeugsitz nach einem der vorhergehenden Ansprüche, **gekennzeichnet durch** eine Auswerteeinrichtung (12) zur Erfassung und Auswertung von Steuerdaten und/oder durch eine Steuerungseinrichtung (11) zur Ansteuerung der Ventileinrichtung (4) auf Basis der Steuerdaten.

10. Fahrzeugsitz nach einem der vorherigen Ansprüche, **dadurch gekennzeichnet, dass** der Fahrzeugsitz ein Sitzkissen und eine Rücklehne aufweist, wobei der Sitzkonturbereich mindestens eine Seitenwange des Sitzkissens oder der Rückenlehne ist.

11. Fahrzeugsitz nach einem der vorherigen Ansprüche , **dadurch gekennzeichnet, dass** der Sitzkonturbereich einen Klappenmechanismus (8a) mit einer Scharniereinrichtung (10a) aufweist, wobei der Klappenmechanismus (8a) durch die Befüllung der ersten und/oder zweiten Kammer (6a, 6b) mit der Druckluft aktivierbar ist und um die Scharniereinrichtung (10a) zur Verstellung des Sitzkonturbereichs klappbar ist, wobei die Abstützeinrichtung (13a) an dem Klappenmechanismus (8a) festgelegt ist.

12. Fahrzeugsitz nach einem der vorherigen Ansprüche, **dadurch gekennzeichnet, dass** die Abstützeinrichtung (13a) an der Scharniereinrichtung (10a) befestigt ist.

13. Fahrzeug mit dem Fahrzeugsitz nach einem der vorherigen Ansprüche, **dadurch gekennzeichnet, dass** das Fahrzeug bei der Fahrt Fahrzustände aufweist, wobei die Auswerteeinrichtung (12) dazu ausgebildet ist, die Fahrzustände als die Steuerdaten zu erfassen und auszuwerten und diese an die Steuerungseinrichtung (11) zu übermitteln.

## Claims

1. A vehicle seat with an adjustment assembly (1), wherein the adjustment assembly (1) comprises a first chamber (6a) and at least one second chamber (6b, 6c, 6d), wherein the two chambers (6a, 6b) can be filled with compressed air, wherein the adjustment assembly (1) has a pneumatic device (2) for generating and introducing the compressed air into the first chamber (6a) and the second chamber (6b), wherein the adjustment assembly (1) comprises at least one support device (13a, 13b), wherein the support device (13a) is designed to support the two chambers (6a, 6b) against each other during and/or during filling with compressed air and/or in a fully filled state (15), wherein the adjustment assembly (1) is designed and/or arranged to adjust a seat contour region of the vehicle seat is, **characterized in that** the seat contour area has a flap mechanism (8a) with a hinge device (10a), wherein the flap mechanism (8a) can be activated by filling the first and/or second chamber (6a, 6b) with compressed air and can be folded about the hinge device (10a) to adjust the seat contour area, wherein the support device (13a) is fixed to the flap mechanism (8a), and that the first chamber (6a) is designed and/or arranged for static adjustment of the seat contour area and/or that the second (6b) chamber is designed and/or arranged for dynamic adjustment of the seat contour area.

2. The vehicle seat according to claim 1, **characterized in that** the first chamber (6a) is fluidically independent of the second chamber (6b) and/or is arranged adjacent to the second chamber (6b), wherein the support device (13a) is arranged between the first chamber (6a) and the second chamber (6b).

3. The vehicle seat according to claim 1 or 2, **characterized in that** the support device (13a) is arranged on the first chamber (6a) or on the second chamber (6b).

4. The vehicle seat according to one of the preceding claims, **characterized in that** the support device (13a) is a strip made of a plastic, a fabric, or a metal.

5. The vehicle seat according to one of the preceding claims, **characterized in that** the second chamber (6b) has a larger volume than the first chamber (6a).

6. The vehicle seat according to one of the preceding claims, **characterized in that** the second chamber (6b) can be completely filled more quickly than the first chamber (6a).

7. A vehicle seat according to one of the preceding claims, **characterized in that** the air pressure in the second chamber (6b) filled with compressed air is higher than the air pressure in the first chamber (6a) filled with compressed air.

8. A vehicle seat according to one of the preceding claims, **characterized in that** the pneumatic device (2) comprises a pump device (3) for generating the compressed air and a valve device (4) for introducing the compressed air into the first chamber (6a) and the second chamber (6b), wherein the introduction of the compressed air into the first chamber (6a) can be controlled independently of the introduction of the compressed air into the second chamber (6b).

9. A vehicle seat according to one of the preceding claims, **characterized by** an evaluation device (12) for acquiring and evaluating control data and/or by a control device (11) for controlling the valve device (4) based on the control data.

10. The vehicle seat according to one of the preceding claims, **characterized in that** the vehicle seat has a seat cushion and a backrest, wherein the seat contour region is at least one side bolster of the seat cushion or the backrest.

11. The vehicle seat according to one of the preceding claims, **characterized in that** the seat contour region has a flap mechanism (8a) with a hinge device (10a), wherein the flap mechanism (8a) can be activated by filling the first and/or second chamber (6a, 6b) with compressed air and can be folded about the hinge device (10a) to adjust the seat contour region, wherein the support device (13a) is fixed to the flap mechanism (8a).

12. The vehicle seat according to one of the preceding claims, **characterized in that** the support device (13a) is attached to the hinge device (10a).

13. Vehicle with the vehicle seat according to one of the preceding claims, **characterized in that** the vehicle has driving states when driving, wherein the evaluation device (12) is designed to detect and evaluate the driving states as the control data and to transmit these to the control device (11).

## Revendications

1. Siège de véhicule équipé d'un ensemble de réglage (1). L'ensemble de réglage (1) comprend une première chambre (6a) et au moins une seconde chambre (6b, 6c, 6d), les deux chambres (6a, 6b) pouvant être remplies d'air comprimé. L'ensemble de réglage (1) est équipé d'un dispositif pneumatique (2) pour générer et introduire l'air comprimé dans la première chambre (6a) et la seconde chambre (6b). L'ensemble de réglage (1) comprend au moins un dispositif de support (13a, 13b), conçu pour soutenir les deux chambres (6a, 6b) l'une contre l'autre pendant le remplissage d'air comprimé et/ou à l'état complètement rempli (15). L'ensemble de réglage (1) est conçu et/ou agencé pour ajuster une zone du contour du siège du véhicule. **Caractérisé en ce que** : la zone du contour du siège est équipée d'un mécanisme de rabat (8a) avec charnière. (10a), le mécanisme de rabat (8a) étant actionnable par le remplissage d'air comprimé de la première et/ou de la deuxième chambre (6a, 6b) et pouvant être replié autour du dispositif d'articulation (10a) pour ajuster le contour de l'assise. Le dispositif de support (13a) est fixé au mécanisme de rabat (8a). La première chambre (6a) est conçue et/ou agencée pour un réglage statique du contour de l'assise et/ou la deuxième chambre (6b) est conçue et/ou agencée pour un réglage dynamique du contour de l'assise.

2. Siège de véhicule selon la revendication 1, **caractérisé en ce que** la première chambre (6a) est fluidiquement indépendante de la deuxième chambre (6b) et/ou est adjacente à cette dernière, le dispositif de support (13a) étant disposé entre la première chambre (6a) et la deuxième chambre (6b).

3. Siège de véhicule selon la revendication 1 ou 2, **caractérisé en ce que** le dispositif de support (13a) est disposé sur la première chambre (6a) ou sur la deuxième chambre (6b).

4. Siège de véhicule selon l'une des revendications précédentes, **caractérisé en ce que** le dispositif de support (13a) est une bande en plastique, en tissu ou en métal.

5. Siège de véhicule selon l'une des revendications précédentes, **caractérisé en ce que** la deuxième chambre (6b) présente un volume supérieur à celui de la première chambre (6a).

6. Siège de véhicule selon l'une des revendications précédentes, **caractérisé en ce que** la deuxième chambre (6b) se remplit complètement plus rapidement que la première chambre (6a).

7. Siège de véhicule selon l'une des revendications précédentes, **caractérisé en ce que** la pression d'air dans la deuxième chambre (6b) remplie d'air comprimé est supérieure à celle de la première chambre (6a) remplie d'air comprimé.

8. Siège de véhicule selon l'une des revendications précédentes, **caractérisé en ce que** le dispositif pneumatique (2) comprend une pompe (3) pour générer l'air comprimé et un dispositif de valve (4) pour introduire l'air comprimé dans la première chambre (6a) et la seconde chambre (6b). L'introduction de l'air comprimé dans la première chambre (6a) peut être commandée indépendamment de l'introduction de l'air comprimé dans la seconde chambre (6b).

9. Siège de véhicule selon l'une des revendications précédentes, **caractérisé par** un dispositif d'évaluation (12) pour l'acquisition et l'analyse des données de commande et/ou par un dispositif de commande (11) pour la commande du dispositif de valve (4) en fonction des données de commande.

10. Siège de véhicule selon l'une des revendications précédentes, **caractérisé en ce que** le siège comporte une assise et un dossier, la zone de contour de l'assise étant au moins un bourrelet latéral de l'assise ou du dossier.

11. Siège de véhicule selon l'une des revendications précédentes, **caractérisé en ce que** la zone du contour de l'assise comporte un mécanisme de rabat (8a) avec un dispositif d'articulation (10a). Le mécanisme de rabat (8a) peut être activé par le remplissage de la première et/ou de la deuxième chambre (6a, 6b) avec de l'air comprimé et peut être replié autour du dispositif d'articulation (10a) pour ajuster la zone du contour de l'assise. Le dispositif de support (13a) est fixé au mécanisme de rabat (8a).

12. Siège de véhicule selon l'une des revendications précédentes, **caractérisé en ce que** le dispositif de support (13a) est fixé au dispositif d'articulation (10a).

13. Véhicule équipé du siège de véhicule selon l'une des revendications précédentes, **caractérisé en ce que** le véhicule présente des états de conduite lors de la conduite, le dispositif d'évaluation (12) étant conçu pour détecter et évaluer ces états de conduite comme données de commande et pour les transmettre au dispositif de commande (11).
